(19) Europäisches Patentamt
European Patent Office
Office européen des brevets

(11) EP 3 148 771 B1

(12) **EUROPEAN PATENT SPECIFICATION**

(45) Date of publication and mention of the grant of the patent:
**07.08.2019 Bulletin 2019/32**

(21) Application number: **15728323.5**

(22) Date of filing: **27.05.2015**

(51) Int Cl.:
***B29C 48/08*** *(2019.01)* ***B29C 48/21*** *(2019.01)*
***B29C 48/71*** *(2019.01)* ***B29C 48/88*** *(2019.01)*
***B29C 48/92*** *(2019.01)* ***B29C 48/49*** *(2019.01)*

(86) International application number:
**PCT/US2015/032586**

(87) International publication number:
**WO 2015/183894 (03.12.2015 Gazette 2015/48)**

(54) **PROCESS FOR PRODUCING MULTILAYER FILM**

VERFAHREN ZUR HERSTELLUNG EINES MEHRSCHICHTIGEN FILMS

PROCÉDÉ POUR LA PRODUCTION DE FILM MULTICOUCHE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.05.2014 US 201462003192 P**

(43) Date of publication of application:
**05.04.2017 Bulletin 2017/14**

(73) Proprietor: **Dow Global Technologies LLC**
**Midland, MI 48674 (US)**

(72) Inventors:
- **LEE, Patrick Chang Dong**
  **Midland, MI 48640 (US)**
- **DOOLEY, Joseph**
  **Charlestown, Indiana 47111 (US)**
- **JENKINS, Steven, R.**
  **Traverse City, MI 49684 (US)**
- **KIRKPATRICK, Donald, E.**
  **Lake Jackson, TX 77566 (US)**
- **WRISLEY, Robert, E.**
  **Clare, MI 48617 (US)**

(74) Representative: **Boult Wade Tennant LLP**
**5th Floor, Salisbury Square House**
**8, Salisbury Square**
**London EC4Y 8AP (GB)**

(56) References cited:
**WO-A1-2012/058789 WO-A1-2013/101699**
**WO-A2-2008/008875**

- **N. N.: "Fundamentals of Cast Film Extrusion Technology", White Papers, 20 July 2013 (2013-07-20), pages 1-9, XP055435127, Mississauga, Ontario, CA Retrieved from the Internet: URL:https://web.archive.org/web/20130720072026/http://www.macroeng.com/fundamentals-of-cast-film-extrusion-technology.php [retrieved on 2017-12-14]**
- **N. N.: "ROLL COVERING FOR THE TRANSFORMATION OF PLASTIC MATERIALS - BLOWN FILM EXTRUSION", company brochure, 7 November 2012 (2012-11-07), pages 1-3, XP055435227, Ronse, Belgium DOI: 10.1371/journal.pone.0027448 Retrieved from the Internet: URL:http://www.hannecard.com/files/uploads/files/APP_FilmFoil_Blown Film Extrusion_en.pdf [retrieved on 2017-12-14]**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 148 771 B1

## Description

BACKGROUND

Many applications exist for plastic films or sheet where improved moisture barrier would be beneficial.

The art recognizes the need for films and sheets with improved barrier properties, particularly moisture barrier, to enable downgauged packaging systems with conventional or improved barrier properties or alternatively, packaging of conventional or thicker dimension with still further improved barrier properties. A film with standard or downgauged overall thickness, utilizing less volume to achieve a given barrier, can provide improved toughness and other properties via the "freed up" volume being used by polymers providing other attributes than barrier. Patent application WO 2013/101699 A1 relates to the extrusion of barrier films.

SUMMARY

The present disclosure is directed to a process whereby post-extrusion process control is used to constrain crystal growth within a barrier polymer and thereby increase barrier capability. The present process increases the proportion of in-plane lamella relative to the non-in-plane lamella (*i.e.*, edge-on lamella) in the barrier layer polymer to increase barrier capability.

The present invention provides a process for producing a cast multilayer film, comprising extruding a cast multilayer film with a core component comprising from 15 to 1000 alternating layers of layer A material and layer B material. The layer A material has a crystallization temperature, $T_1c$. The process includes passing the multilayer film across an air gap between a die exit and a roller contact point, the air gap having a length from 75 mm to 800 mm. The process includes moving the multilayer film across a roller at a rate from 20 kg/hr to 1000 kg/hr. The process includes maintaining the roller at a temperature from $T_1c$ - 30°C to $T_1c$, and forming a multilayer film with a layer A having a thickness from 50 nm to 500 nm and an effective moisture permeability from 0.77 to 2.33 g-mil/$m^2$/24 hrs.

BRIEF DESCRIPTION OF THE DRAWINGS

The accompanying figures together with the following description serve to illustrate and provide a further understanding of the present disclosure and its embodiments and are incorporated in and constitute a part of this specification.

FIG. 1 is a schematic diagram illustrating a method of making a multilayer film in accordance with an embodiment of the present disclosure.
Fig. 2 is a graph showing the effective permeability of a layer A of HDPE in accordance with embodiments of the present disclosure.

DEFINITIONS

"Blend", "polymer blend" and like terms mean a composition of two or more polymers. Such a blend may or may not be miscible. Such a blend may or may not be phase separated. Such a blend may or may not contain one or more domain configurations, as determined from transmission electron spectroscopy, light scattering, x-ray scattering, and any other method known in the art. Blends are not laminates, but one or more layers of a laminate may contain a blend.

The term "composition" and like terms mean a mixture of two or more materials, such as a polymer which is blended with other polymers or which contains additives, fillers, or the like. Included in compositions are pre-reaction, reaction and post-reaction mixtures the latter of which will include reaction products and by-products as well as unreacted components of the reaction mixture and decomposition products, if any, formed from the one or more components of the pre-reaction or reaction mixture.

An "ethylene-based polymer is a polymer that contains more than 50 mole percent polymerized ethylene monomer (based on the total amount of polymerizable monomers) and, optionally, may contain at least one comonomer.

As used herein, the term "film", including when referring to a "film layer" in a thicker article, unless expressly having the thickness specified, includes any thin, flat extruded or cast thermoplastic article having a generally consistent and uniform thickness from 25 micrometers up to 500 micrometers. "Layers" in films can be very thin, as in the cases of nanolayers discussed in more detail below.

As used herein, the term "sheet", unless expressly having the thickness specified, includes any thin, flat extruded or cast thermoplastic article having a generally consistent and uniform thickness greater than "film", generally greater than 500 micrometers and up to about 7.5 mm (295 mils) thick.

Either film or sheet, as those terms are used herein can be in the form of shapes, such as profiles, parisons,

tubes, and the like, that are not necessarily "flat" in the sense of planar but utilize A and B layers according to the present disclosure and have a relatively thin cross section within the film or sheet thicknesses according to the present disclosure.

"Interpolymer" is a polymer prepared by the polymerization of at least two different monomers. This generic term includes copolymers, usually employed to refer to polymers prepared from two or more different monomers, and includes polymers prepared from more than two different monomers, e.g., terpolymers, tetrapolymers, etc.

"Melting Point" (Tm) is the extrapolated onset of melting and is determined by DSC as set forth in the "Test Methods" section. The melting point is in degrees Celsius.

"Crystallization temperature" (Tc) is the extrapolated onset of crystallization and is determined by DSC as set forth in the "Test Methods" section. The crystallization temperature is in degrees Celsius.

"Glass transition temperature" (Tg) is determined from the DSC heating curve as set for in the "Test Methods" section. The glass transition temperature is in degrees Celsius.

A "nanolayer structure," as used herein, is a multilayer structure having two or more layers each layer with a thickness from 1 nanometer to 900 nanometers.

An "olefin-based polymer," as used herein, is a polymer that contains more than 50 mole percent polymerized olefin monomer (based on total amount of polymerizable monomers), and optionally, may contain at least one comonomer. Nonlimiting examples of olefin-based polymer include ethylene-based polymer and propylene-based polymer.

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter. The term polymer includes trace amounts of impurities, for example catalyst residue, that may be incorporated into and/or within the polymer.

A "propylene-based polymer" is a polymer that contains more than 50 mole percent polymerized propylene monomer (based on the total amount of polymerizable monomers) and, optionally, may contain at least one comonomer.

Unless stated to the contrary, implicit from the context, or customary in the art, all parts and percents are based on weight.

DETAILED DESCRIPTION

The present disclosure provides a process for making a multilayer film. The process can be used to produce blown film, cast film, or sheet.

According to the invention, the process for producing a cast multilayer film includes extruding a multilayer film with a core component comprising from 15 to 1000 alternating layers of layer A material and layer B material. The layer A material has a crystallization temperature, $T_1c$. The process includes (A) passing the multilayer film across an air gap between a die exit and a roller contact point, the air gap having a length from 75 mm to 800 mm and (B) moving the multilayer film across a roller at a rate from 20 kg/hr to 1000 kg/hr. The process includes (C) maintaining the roller at a temperature from $T_1c$ - 30°C to the $T_1c$ of the layer A material. The process includes forming a multilayer film with a layer A having a thickness from 50 nm to 500 nm and an effective moisture permeability from 0.77 to 2.33 g-mil/$m^2$/24 hours.

*1. Core Component*

The process includes extruding a multilayer film with a core component. The core component has from 15 to 1000 alternating layers of layer A and layer B. Process temperatures for the extruders are typically chosen to heat the layer A material and the layer B material sufficiently above the glass transition temperature and melting point for each respective layer material in order to (1) fully melt any residual crystals that might alter crystallization, (2) achieve best viscosity matches between layers and (3) affect an optimum film pinning.

The process includes extruding a multilayer film with a core component. The core component has from 15 to 1000 alternating layers of layer A and layer B. In other words, the process includes coextruding from 15 to 1000 alternating layers of layer A and layer B.

In an embodiment, the core component includes 257 alternating layers of layer A and layer B.

The present core component is a two component structure composed of polymeric material "A" (produces layer A) and polymeric material "B" (produces layer B) and is initially coextruded into a starting "AB" or "ABA" layered feedstream configuration where "A" represents layer A and "B" represents layer B. Then, known layer multiplier techniques can be applied to multiply and thin the layers resulting from the feedstream. Layer multiplication is usually performed by dividing the initial feed stream into 2 or more channels and "stacking" of the channels. The general formula for calculation of the total numbers of layers in a multilayer structure using a feedblock and repeated, identical layer multipliers is: $N_t=(N_I)(F)^n$ where: $N_t$ is the total number of layers in the final structure; $N_I$ is the initial number of layers produced by the feedblock; F is the number of layer multiplications in a single layer multiplier, usually the "stacking" of 2 or more channels; and n

is number of identical layer multiplications that are employed.

For multilayer structures of two component materials A and B, a three layer ABA initial structure is frequently employed to result in a final film or sheet where the outside layers are the same on both sides of the film or sheet after the layer multiplication step(s). Where the A and B layers in the final film or sheet are intended to be generally equal thickness and equal volume percentages, the two A layers in the starting ABA layer structure are half the thickness of the B layer but, when combined together in layer multiplication, provide the same layer thickness (excepting the two, thinner outside layers) and comprise half of the volume percentage-wise. As can be seen, since the layer multiplication process divides and stacks the starting structure multiple times, two outside A layers are always combined each time the feedstream is "stacked" and then add up to equal the B layer thickness. In general, the starting A and B layer thicknesses (relative volume percentages) are used to provide the desired relative thicknesses of the A and B layers in the final film. Since the combination of two adjacent, like layers appears to produce only a single discrete layer for layer counting purposes, the general formula $N_t=(2)^{(n+1)}+1$ is used for calculating the total numbers of "discrete" layers in a multilayer structure using an "ABA" feedblock and repeated, identical layer multipliers where $N_t$ is the total number of layers in the final structure; 3 initial layers are produced by the feedblock; a layer multiplication is division into and stacking of 2 channels; and n is number of identical layer multiplications that are employed.

A suitable two component coextrusion system (*e.g.*, repetitions of "AB" or "ABA") has two ¾ inch single screw extruders connected by a melt pump to a coextrusion feedblock. The melt pumps control the two melt streams that are combined in the feedblock as two or three parallel layers in a multilayer feedstream. Adjusting the melt pump speed varies the relative layer volumes (thicknesses) and thus the thickness ratio of layer A to layer B. From the feedblock, the feedstream melt goes through a series of multiplying elements. It is understood that the number of extruders used to pump melt streams to the feedblock in the fabrication of the structures of the disclosure generally equals the number of different components. Thus, a three-component repeating segment in the multilayer structure (ABC...), requires three extruders.

Examples of known feedblock processes and technology are illustrated in WO 2008/008875; US Patent 3,565,985; US Patent 3,557,265; and US Patent 3,884,606. Layer multiplication process steps are shown, for example, in US Patents 5,094,788 and 5,094,793, hereby incorporated herein by reference, teaching the formation of a multilayer flow stream by dividing a multilayer flow stream containing the thermoplastic resinous materials into first, second and optionally other substreams and combining the multiple substreams in a stacking fashion and compressing, thereby forming a multilayer flow stream. As may be needed depending upon materials being employed for film or sheet production and the film or sheet structures desired, films or sheet comprising two or more layers of the multilayer flow stream can be provided by encapsulation techniques such as shown by US Patent 4,842,791 encapsulating with one or more generally circular or rectangular encapsulating layers stacked around a core; as shown by of US Patent 6,685,872 with a generally circular, nonuniform encapsulating layer; and/or as shown by WO 2010/096608A2 where encapsulated multilayered films or sheet are produced in an annular die process. US Patents 4,842,791 and 6,685,872 and WO 2010/096608A2 relate to this process.

The number of A layers and B layers present in the core component can be the same or different. In an embodiment, the A:B layer ratio (number of A layers to the number of B layers) is from 1:1, or 3:1, to 9:1.

The layer A material has a crystallization temperature, or $T_1c$. The layer A material can be a propylene-based polymer or an ethylene-based polymer. In an embodiment, the layer A is composed of a material A that is an ethylene-based polymer. The ethylene-based polymer has a crystallization temperature (*i.e.*, the material A $T_1c$).

The ethylene-based polymer for material A may be an ethylene homopolymer or an ethylene/$\alpha$-olefin copolymer. The ethylene-based polymer has a melt index from 0.01 g/10 minutes (g/10 min) to 35 g/10 min.

In an embodiment, the layer A includes a high density polyethylene (HDPE). A "high density polyethylene" (or "HDPE"), as used herein, is an ethylene-based polymer having a density of at least 0.94 g/cc, or from at least 0.94 g/cc to 0.98 g/cc. The HDPE has a melt index from 0.1 g/10 min to 25 g/10 min.

The HDPE can include ethylene and one or more $C_3$-$C_{20}$) $\alpha$-olefin comonomers. The comonomer(s) can be linear or branched. Nonlimiting examples of suitable comonomers include propylene, 1-butene, 1 pentene, 4-methyl-1-pentene, 1-hexene, and 1-octene. The HDPE can be prepared with either Ziegler-Natta, chromium-based, constrained geometry or metallocene catalysts in slurry reactors, gas phase reactors or solution reactors. The ethylene/$C_3$-$C_{20}$ $\alpha$-olefin comonomer includes at least 50 percent by weight ethylene polymerized therein, or at least 70 percent by weight, or at least 80 percent by weight, or at least 85 percent by weight, or at least 90 weight percent, or at least 95 percent by weight ethylene in polymerized form.

In an embodiment, the HDPE is an ethylene/$\alpha$-olefin copolymer with a density from 0.95 g/cc to 0.98 g/cc, and a melt index from 0.1 g/10 min to 10 g/10 min. In an embodiment, the HDPE has a density from 0.960 g/cc to 0.980 g/cc, and a melt index from 0.1 g/10 min to 10 g/10 min.

In an embodiment, the HDPE has a density from 0.95 g/cc, or 0.96 g/cc to 0.97 g/cc and a melt index from 0.1 g/10 min to 10 g/min.

In an embodiment, the HDPE has a density from 0.96 g/cc to 0.98 g/cc and a melt index from 1.0 g/10 min to

3.0 g/10 min.

Nonlimiting examples of suitable HDPE include ELITE 5960G, HDPE KT 10000 UE, HDPE KS 10100 UE and HDPE 35057E, each available from The Dow Chemical Company Midland, Michigan, USA; and SURPASS available from Nova Chemicals Corporation, Calgary, Alberta, Canada.

In an embodiment, layer A may include a blend of the HDPE and one or more additional polymers. Nonlimiting examples of suitable blend components for layer A include ethylene-based polymers, propylene-based polymers, and combinations thereof.

The HDPE may comprise two or more of the foregoing embodiments.

The layer B material can be a cyclic olefin polymer, a propylene-based polymer, a polycarbonate, and combinations thereof. In an embodiment, layer B is composed of a material B that is a cyclic olefin polymer (COP). A "cyclic olefin polymer (or "COP") is an olefin-based polymer that includes a saturated hydrocarbon ring. Suitable COPs include at least 25 wt % cyclic units, which weight percentage is calculated based on the weight percentage of the olefin monomer units containing, including functionalized to contain, the cyclic moiety ("MCCM") that is polymerized into the COP as a percentage of the total weight of monomers polymerized to form the final COP.

A "cyclic olefin polymer (or "COP") is an olefin-based polymer that includes a saturated hydrocarbon ring. Suitable COPs include at least 25 wt % cyclic units, which weight percentage is calculated based on the weight percentage of the olefin monomer units (which may be functionalized) containing the cyclic moiety ("MCCM") that is polymerized into the COP as a percentage of the total weight of monomers polymerized to form the final COP.

In an embodiment, the COP includes at least 40 wt %, or at least 50 wt % or at least 75 wt % MCCM. The cyclic moiety can be incorporated in the backbone of the polymer chain (such as from a norbornene ring-opening type of polymerization) and/or pendant from the polymer backbone (such as by polymerizing styrene (which is eventually hydrogenated to a cyclic olefin) or other vinyl-containing cyclic monomer). The COP can be a homopolymer based on a single type of cyclic unit; a copolymer comprising more than one cyclic unit type; or a copolymer comprising one or more cyclic unit type and other incorporated monomer units that are not cyclic, such as units provided by or based on ethylene monomer. Within copolymers, the cyclic units and other units can be distributed in any way including randomly, alternately, in blocks or some combination of these. The cyclic moiety in the COP need not result from polymerization of a monomer comprising the cyclic moiety per se but may result from cyclicly functionalizing a polymer or other reaction to provide the cyclic moiety units or to form the cyclic moiety from a cyclic moiety precursor. As an example, styrene (which is a cyclic moiety precursor but not a cyclic unit for purposes of this disclosure) can be polymerized to a styrene polymer (not a cyclic olefin polymer) and then later be completely or partially hydrogenated to result in a COP.

The MCCMs which can be used in polymerization processes to provide cyclic units in COP's include but are not limited to norbornene and substituted norbornenes. As mentioned above, cyclic hexane ring units can be provided by hydrogenating the styrene aromatic rings of styrene polymers. The cyclic units can be a mono- or multi-cyclic moiety that is either pendant to or incorporated in the olefin polymer backbone. Such cyclic moieties/structures include cyclobutane, cyclohexane or cyclopentane, and combinations of two or more of these. For example, cyclic olefin polymers containing cyclohexane or cyclopentane moieties are $\alpha$-olefin polymers of 3-cyclohexyl-1-propene (allyl cyclohexane) and vinyl cyclohexane.

In an embodiment, the COP is a cyclic olefin block copolymers (or "CBC") prepared by producing block copolymers of butadiene and styrene that are then hydrogenated, preferably fully hydrogenated, to a CBC. Nonlimiting examples of suitable CBC include CBC that is fully hydrogenated di-block (SB), tri-block (SBS) and penta-block (SBSBS) polymer. In such tri- and penta-block copolymer, each block of a type of unit is the same length; *i.e.*, each S block is the same length and each B block is the same length. Total molecular weight (Mn) prior to hydrogenation is from about 25,000 to about 1,000,000 g/mol. The percent of styrene incorporated is from 10 to 99 wt %, or from 50 to 95 wt % or from 80 to 90 wt %, the balance being butadiene. For example, WO2000/056783(A1), discloses the preparation of such pentablock types of COPs.

Other COPs are described in Yamazaki, Journal of Molecular Catalysis A: Chemical, 213 (2004) 81-87; and Shin et al., Pure Appl. Chem., Vol. 77, No. 5, (2005) 801-814. In the publication from Yamazaki (of Zeon Chemical) the polymerization of a COP is described as based on a ring opening metathesis route via norbornene. Commercially available COP products from Zeon Chemical are described as an amorphous polyolefin with a bulky ring structure in the main chain, based on dicyclopentadiene as the main monomer and saturating the double bond in norbornene ring-opening metathesis with a substituent (R) by hydrogenation. A nonlimiting example of a suitable is COP is Zeonor 1420 sold by Zeon Chemical.

Another example of COPs are the Topas brand cyclic olefin copolymers commercially available from Topas Advanced Polymers GmbH which are amorphous, transparent copolymers based on cyclic olefins (*i.e.*, norbornene) and linear olefins (*e.g.*, ethylene), with heat properties being increased with higher cyclic olefin content. Preferably such COP s are represented by the following formula with the x and y values selected to provide suitable thermoplastic polymers:

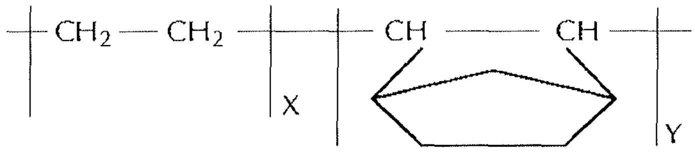

The layers comprising the COPs can be made from COPs or can comprise physical blends of two or more COPs and also physical blends of one or more COP with polymers that are not COPs provided that any COP blends or compositions comprise at least 25 wt % cyclic olefin unit content in the total blend or composition.
In an embodiment, layer B includes a cyclic block copolymer.
In an embodiment, layer B includes a cyclic block copolymer that is a pentablock hydrogenated styrene.
In an embodiment, the layer A material has a crystallization temperature, $T_1c$. The layer B material has a glass transition temperature ($T_2g$) or a crystallization temperature ($T_2c$) wherein

$T_1c < T_2g$ or
$T_1c < T_2c$.

In an embodiment, $T_2g$ is at least 20°C greater than $T_1c$. In an embodiment, $T_2c$ is at least 20°C greater than $T_1c$.
In an embodiment, the layer A material is HDPE or a propylene-based material. The layer B material is a propylene-based material, a COP, a polycarbonate, or combinations thereof.

*2. Air Gap*

The process includes passing the multilayer film (also known as a multilayer film extrudate) across an air gap having a length from 75 millimeters (mm) to 800 mm. In an embodiment, the process includes passing the multilayer film across an air gap having a length from 80 mm, or 90 mm, or 100 mm, or 125 mm, or 150 mm, or 175 mm, or 200 mm, or 225 mm, or 250 mm, or 275 mm, or 300 mm to 325 mm, or 350 mm, or 375 mm, or 400 mm, or 425 mm, or 450 mm, or 475 mm, or 500 mm, or 525 mm, or 550 mm, or 575 mm, or 600 mm, or 650 mm, or 700 mm, or 750 mm, or 800 mm.
In an embodiment, the process includes passing the multilayer film across an air gap having a length from 200 mm to 500 mm.

*3. Roller*

The process incudes moving the multilayer film across a roller at a rate from 20 kilograms/hour (kg/hr) to 1000 kg/hr. The roller may be one, two, three, four, five or more rollers, the roller(s) being temperature controlled as will be described below. The moving step transports the multilayer film across the surface of one or more rollers.
In an embodiment, at least two rollers are configured in opposing and cooperating arrangement with respect to each other. Two opposing rollers constitute a roller set. It is understood that the multilayer film may move through one, two, three, four, five, or more roller sets. The multilayer film moves through and between the opposing rollers and is "sandwiched" by the opposing rollers. In other words, as the multilayer film moves between the opposing rollers, each outermost surface of the multilayer film moves across the surface of a respective roller simultaneously or substantially simultaneously.
The following discussion to a single roller applies equally to multiple rollers, opposing rollers, and/or roller sets. The moving procedure places at least one outermost surface of the multilayer film into contact with the surface of a respective roller. In an embodiment, the surface of the roller is coated or is otherwise surface treated or embossed to affect easier release or to apply texture to the outermost layer of the multilayer film. Pinning of the multilayer film extrudate to a roller can be achieved by vacuum box, air knife, heated air knife or contact roll optionally temperature controlled such as a rubber roll.
In an embodiment, the process includes moving the multilayer film across the roller at a rate from 20 kg/hr, or 30 kg/hr, or 40 kg/hr, or 50 kg/hr, or 60 kg/hr, or 70 kg/hr, or 80 kg/hr, or 90 kg/hr, or 100 kg/hr, or 200 kg/hr, or 300 kg/hr, or 400 kg/hr to 500 kg/hr, or 600 kg/hr, or 700 kg/hr, or 800 kg/hr, or 900 kg/hr, or 1000 kg/hr. It is understood that the foregoing rates are suitable for commercial-scale production of the multilayer film.
The process includes maintaining the roller at a temperature 30°C less than the crystallization temperature of the layer A material to the crystallization temperature of the layer A material. In other words, the range for the roller temperature is based on the crystallization temperature of the layer A material. This temperature range is denoted as "$T_1c$-30°C to $T_1c$" or "from $T_1c$ minus 30°C to $T_1c$." The temperature range for the roller will be further described by the following two nonlimiting examples. If the $T_1c$ for the layer A material is 110°C, then the rollers are maintained at a temperature in the range from 80°C (110°C - 30°C = 80°C) to 110°C. As another nonlimiting example, if the $T_1c$ for the

layer A material is 120°C, then the temperature range for the rollers is 90°C (120°C - 30°C = 90°C) to 120°C.

In an embodiment, the process includes maintaining the roller at a temperature from $T_1c$ - 30°C, or $T_1c$ - 29°C, or $T_1c$ - 25°C, or $T_1c$ - 21°C, or $T_1c$ - 20°C, or $T_1c$ - 15°C to $T_1c$ - 10°C, or $T_1c$ - 5°C, or $T_1c$ - 3°C, or $T_1c$ - 1°C, or $T_1c$.

If multiple rollers or multiple roller sets are used, each individual roller set may be at the same temperature or at a different temperature.

In an embodiment, the roller is maintained at a temperature from 20°C, or 30°C, or 40°C, or 50°C, or 60°C, or 70°C, or 80°C, to 90°C, or 100°C or 125°C, or 130°C. In a further embodiment, each roller in a roller set is maintained at the same temperature in the foregoing temperature range.

In an embodiment, the process includes passing a fluid through each roller to maintain each roller at a temperature from 80°C, or 85°C, or 90°C, or 93°C to 95°C, or 100°C, or 105°C, or 110°C, or 120°C, or 125°C, or 130°C.

In an embodiment, the process includes moving the multilayer film through temperature controlled rollers, each roller having a temperature from 93°C to 110°C.

The thickness of layer A and layer B can be the same or different. The extruding step, the passing step, and the moving step can form a layer A having a thickness from 50 nm, or 70 nm, or 80 nm, or 100 nm, or 145 nm, or 150 nm, or 198 nm, or 200 nm, or 250 nm, or 290 nm, or 300 nm, or 350 nm, or 396 nm, or 400 nm, or 450 nm to 500 nm, or 600 nm, or 700 nm, or 792 nm, or 800 nm, or 900 nm, or 1000 nm. Similarly, the extruding step, the passing step, and the moving step can form a layer B having a thickness from 10 nm, or 20 nm, or 30 nm, or 50 nm, or 70 nm, or 80 nm, or 100 nm, or 145 nm, or 150 nm, or 198 nm, or 200 nm, or 250 nm, or 290 nm, or 300 nm, or 350 nm, or 396 nm, or 400 nm, or 450 nm to 500 nm, or 600 nm, or 700 nm, or 792 nm, or 800 nm, or 900 nm, or 1000 nm.

In an embodiment, the process includes forming a multilayer film with a layer A having a thickness from 50 nm to 500 nm, the layer A having an effective moisture permeability from 0.77 to 2.33 g-mil/$m^2$/24 hrs.

In an embodiment, the process includes forming a multilayer film with a layer A having a thickness from 200 nm, or 278 nm to 300 nm and the layer A has an effective moisture permeability from 0.77 to 2.33 g-mil/$m^2$/24 hrs.

In an embodiment, the process includes forming a multilayer film with a layer B having a thickness from 200 nm, or 278 nm to 300 nm.

In an embodiment, the process includes maintaining the layer A at a temperature above the material A $T_1c$ during the passing step.

In an embodiment, the moving step includes contacting the multilayer film with the opposing rollers for a duration from 0.1 seconds, or 1 second, or 1.5 seconds, or 2.0 seconds, or 2.5 seconds, or 3.0 seconds to 3.5 seconds, or 4.0 seconds, or 4.5 seconds, or 4.9 seconds, or 5.0 seconds.

In an embodiment, the process includes maintaining the layer A at, or above, the material A $T_1c$ during the passing step so as to inhibit or otherwise prevent crystallization of the material A during the passing step. The process further includes commencing crystallization of the material A material upon contact of the multilayer film with the temperature controlled rollers. In this way, the passing step slows layer A material crystallization and promotes creation of more in-plane lamella compared to edge-on lamella. In a further embodiment, the process includes continuing crystallization of the layer A material after the contact between the multilayer film and the roller.

In an embodiment, the process includes, coextruding opposing skin layers on the core component and forming a multilayer film having a thickness from 25 micrometers, or 50 micrometers, or 100 micrometers, or 150 micrometers, to 200 micrometers or 250 micrometers. In an embodiment, the process includes, coextruding opposing skin layers on the core component and forming a multilayer sheet having thickness of 250 micrometers, or 300 micrometers, or 400 micrometers to 2.5mm, or 5mm, or 7.5mm.

In an embodiment, the multilayer film includes two skin layers. The skin layers are outermost layers, with a skin layer on each side of the core component. The skin layers oppose each other and sandwich the core component. The composition of each individual skin layer may be the same or different as the other skin layer. Nonlimiting examples of suitable polymers that can be used as skin layers include propylene-based polymer, ethylene-based polymer, oxide, polycaprolactone, polyamides, polyesters, polyvinylidene fluoride, polystyrene, polycarbonate, polymethylmethacrylate, polyamides, ethylene-co-acrylic acid copolymers, polyoxymethylene and blends of two or more of these; and blends with other polymers comprising one or more of these.

In an embodiment, the skin layers include propylene-based polymer, ethylene-based polymer ethylene homopolymer, ethylene copolymer, propylene homopolymer, propylene copolymer, polyamide, polystyrene, polycarbonate and polyethylene-co-acrylic acid copolymers.

The thickness of each skin layer may be the same or different. The two skin layers have a thickness from 5%, or 10%, or 15% to 20%, or 30%, or 35% the total volume of multilayer film.

In an embodiment, the thickness of the skin layers is the same. The two skin layers with the same thickness are present in multilayer film in the volume percent set forth above. For example, a multilayer film with 35% skin layer indicates each skin layer is present at 17.5% the total volume of the multilayer film.

In an embodiment, the composition of each skin layer is the same and each skin layer is an ethylene-based polymer.

The skin layers may be in direct contact with the core component (no intervening layers). Alternatively, the multilayer film may include one or more intervening layers between each skin layer and the core component. The present multilayer film may include optional additional layers. The optional layer(s) may be intervening layers (or internal layers) located between the core component and the skin layer(s). Such intervening layers (or internal layers) may be single, repeating, or regularly repeating layer(s). Such optional layers can include the materials that have (or provide) sufficient adhesion and provide desired properties to the films or sheet, such as tie layers, barrier layers, skin layers, etc.
Nonlimiting examples of suitable polymers that can be employed as tie or adhesive layers include: ethylene copolymers, olefin block copolymers (OBC) of ethylene or propylene such as PE-OBC sold as INFUSE or PP-OBC sold as INTUNE by The Dow Chemical Company, polar ethylene copolymers such as copolymers with vinyl acetate, acrylic acid, methyl acrylate, and ethyl acrylate; ionomers; maleic anhydride-grafted ethylene polymers and copolymers; blends of two or more of these; and blends with other polymers comprising one or more of these.
Nonlimiting examples of suitable polymers that can be employed as barrier layers include: polyethylene terephthalate, ethylene vinyl alcohol, polyvinylidene chloride copolymers, polyamides, polyketones, MXD6 nylon, blends of two or more of these; and blends with other polymers comprising one or more of these.
In an embodiment, the process includes co-extruding opposing skin layers composed of an ethylene-based polymer to the core component.
In an embodiment, material A is a propylene-based polymer and material B is a COP.
In an embodiment, material A is a HDPE and material B is a COP. The process includes extruding a multilayer film with a core component of 15 to 1000 alternating layers of layer A (HDPE) and layer B (COP), passing the multilayer film across an air gap having a length from 250 mm to 360 mm, moving the multilayer film through opposing rollers having a temperature from greater than 80°C to 110°C and forming a multilayer film having a layer A (HDPE) with a thickness from 200 nm to 300 nm and the layer A having an effective moisture permeability. In a further embodiment, the process includes passing the multilayer film through the opposing rollers wherein the rollers have a temperature from 93°C to 100°C and forming a multilayer film having a layer A (HDPE) with a thickness from 200 nm to 300 nm and the layer A has an effective moisture permeability from 0.77 to 1.50 g-mil/$m^2$/24 hrs.
In an embodiment, the process includes forming a cast multilayer film.
Applicant discovered that process control of one, some, or all the following parameters can be used to improve barrier property in multilayer film:

- multilayer film extrudate temperature;
- air gap;
- rate (kg/hr of the multilayer film);
- roller temperature, roll diameter;
- contact duration.

Applicant found that a balance of the foregoing parameters yields a heretofore unknown synergy whereby the crystallization of the layer A material can be controlled, or otherwise fine-tuned, such that the amount of in-plane lamella in the layer A material can be increased to improve barrier capability of the multilayer film. The present process enables the proportion of in-plane lamella to be increased relative to the amount of edge-on lamella present layer A. Increasing the amount of in-plane lamella (and decreasing the amount of edge-on lamella) advantageously improves the barrier properties of the layer A and the multilayer film.

TEST METHODS

Percent crystallinity, melting temperature, Tm, crystallization temperature (Tc), and glass transition temperature (Tg), each is measured by way of Differential Scanning Calorimetry (DSC) as set forth below.

DSC

Differential Scanning Calorimetry (DSC) can be used to measure the melting, crystallization, and glass transition behavior of a polymer over a wide range of temperature. For example, the TA Instruments Q1000 DSC, equipped with an RCS (refrigerated cooling system) and an autosampler is used to perform this analysis. During testing, a nitrogen purge gas flow of 50 ml/min is used. Each sample is melt pressed into a thin film at about 175°C; the melted sample is then air-cooled to room temperature (about 25°C). A 3-10 mg, 6 mm diameter specimen is extracted from the cooled polymer, weighed, placed in a light aluminum pan (ca 50 mg), and crimped shut. Analysis is then performed to determine its thermal properties.
The thermal behavior of the sample is determined by ramping the sample temperature up and down to create a heat flow versus temperature profile. First, the sample is rapidly heated to 180°C and held isothermal for 3 minutes in

order to remove its thermal history. Next, the sample is cooled to -40°C at a 10°C/minute cooling rate and held isothermal at -40°C for 3 minutes. The sample is then heated to 180 °C (this is the "second heat" ramp) at a 10°C/minute heating rate. The cooling and second heating curves are recorded. The cool curve is analyzed by setting baseline endpoints from the beginning of crystallization to -20°C. The heat curve is analyzed by setting baseline endpoints from -20°C to the end of melt. The values determined are extrapolated onset of melting, Tm, and extrapolated onset of crystallization, Tc. Heat of fusion ($H_f$) (in Joules per gram), and the calculated % crystallinity for polyethylene samples using the Equation below:

$$\% \text{ Crystallinity} = ((H_f)/292 \text{ J/g}) \times 100$$

The heat of fusion ($H_f$) and the peak melting temperature are reported from the second heat curve. Peak crystallization temperature is determined from the cooling curve.

Melting point, Tm, is determined from the DSC heating curve by first drawing the baseline between the start and end of the melting transition. A tangent line is then drawn to the data on the low temperature side of the melting peak. Where this line intersects the baseline is the extrapolated onset of melting (Tm). This is as described in B. Wunderlich in Thermal Characterization of Polymeric Materials, 2nd edition, Academic Press, 1997, E. Turi ed., pgs. 277 and 278.

Crystallization temperature, Tc, is determined from a DSC cooling curve as above except the tangent line is drawn on the high temperature side of the crystallization peak. Where this tangent intersects the baseline is the extrapolated onset of crystallization (Tc).

Glass transition temperature, Tg, is determined from the DSC heating curve where half the sample has gained the liquid heat capacity as described in B. Wunderlich in Thermal Characterization of Polymeric Materials, 2nd edition, Academic Press, 1997, E. Turi ed., pg. 278 and 279. Baselines are drawn from below and above the glass transition region and extrapolated through the Tg region. The temperature at which the sample heat capacity is halfway between these baselines is the Tg.

Density is measured in accordance with ASTM D 792.

Effective permeability (Peff). The effective permeability (moisture and oxygen) for an individual barrier layer is calculated using Equation (I) as follows:

Equation I

$$P_B = V_B \left( \frac{1}{P} - \frac{1 - V_B}{P_c} \right)^{-1}$$

wherein P is the permeability of the nanolayer component, $V_B$ and $V_C$ are the volume fraction of the barrier and confining polymers, respectively, and $P_B$ and $P_c$ are the permeability of the barrier and confining polymers, respectively. Effective moisture permeability is measured as g-mil/m$^2$/24 hrs.

Melt flow rate (MFR) is measured in accordance with ASTM D 1238, Condition 280°C/2.16 kg (g/10 minutes).

Melt index (MI) is measured in accordance with ASTM D 1238, Condition 190°C/2.16 kg (g/10 minutes).

Moisture permeability is a normalized calculation performed by first measuring Water Vapor Transmission Rate (WVTR) for a given film thickness. WVTR is measured at 38°C, 100% relative humidity and 1 atm pressure are measured with a MOCON Permatran-W 3/31. The instrument is calibrated with National Institute of Standards and Technology certified 25 $\mu$m-thick polyester film of known water vapor transport characteristics. The specimens are prepared and the WVTR is performed according to ASTM F1249. Unit for WVTR is gram (g)/square meter (m$^2$)/ day (24 hr), or g/m$^2$/24 hr.

Oxygen permeability is a normalized calculation performed by first measuring Oxygen Transmission Rate (OTR) for a given film thickness. OTR is measured at 23°C, 0% relative humidity and 1 atm pressure are measured with a MOCON OX-TRAN 2/20. The instrument is calibrated with National Institute of Standards and Technology certified Mylar film of known $O_2$ transport characteristics. The specimens are prepared and the OTR is performed according to ASTM D 3985. Unit for OTR is cubic centimeter (cc)/square meter (m$^2$)/ day (24 hr), or cc/m$^2$/24 hr.

Some embodiments of the present disclosure will now be described in detail in the following Examples.

EXAMPLES

Multilayer films are made with the materials shown in Table 1 below. One layer control films are extruded from

each of the HDPE and the COC and tested as described below for control film Water Vapor Transmission Rate (WVTR) values.

Table 1 - Materials

| Material | Trade Name | Density (g/cc) | MFR (g/10 min) | Moisture Permeability (g-mil/$m^2$/ 24 hr) |
|---|---|---|---|---|
| COC | Zeonor1420R Zeon Chemicals L.P. | 1.01 | 20 @ 280°C, 21.18N | 4.7 @100%RH |
| HDPE | Surpass HPs167 NOVA | 0.966 | 1.2 @ 190°C, 2.16kg | 3.3 @ 100% RH |

Extruders 3.81 cm (1.5 inch) A and B feed a three layer feedblock coupled with layer multipliers (see Figure 1). The multilayered structures are further sandwiched with two skin layers by another extruder before entering a 71.12 cm (28 inch) coat hanger die with a 0.11176 cm (0.044) inch die lip gap. The extruded films are passed through a Wayne Machine Custom Cast roller stack unit to obtain the desired film thickness 0.00635 cm (2.5 mils). This unit is composed of two 30.48 cm (12 inch) diameter x 76.2 cm (30 inch) wide rollers chrome plated with #2 mirror finish. The primary and secondary casting unit has a drive unit that is a 1 horsepower (HP) closed loop AC Flux Vector drive system. The pull rollers are two 10.16 cm (4 inch) (diameter) x 76.2 cm (30 inch) (wide) silicone covered rollers. The cast unit is installed with a 76.2 cm (30 inch) vortex air knife mounted on the unit and is supplied with 551.6 kPa (80 psi) of air. The film winder is a 86.36 cm (34 inch) wide single turret winder manufactured by Black Clawson.

Four multilayer films are prepared having 257 thin layers of alternating layer A (HDPE) and layer B (COC). The coextruded multilayer films generated are shown in Table 1. These samples are inline thermally treated at four different temperatures 21°C, 66°C, 93°C, and 110°C (70°F, 150°F, 200°F, 230°F). The inline thermal treatment is performed as the coextruded film contacts the chill rollers at specific temperatures. The air gap between the die exit and the chill roller contact point is 76 mm (3 inches) and the contact time between the film and the roller at the given processing condition is less than 5 seconds.

Table 2

| Example | A Layer | A GP (RPM) | B Layer | B GP (RPM) | Skin Material | Skin RPM (RPM) | Ext Temp (°C) | Die Temp (°C) | Roller Temp (°C) | Rate kg/h (lb/h) | Total Thickness (mil) | A layer Volume % | B layer Volume % | Skin Volume % | Core component volume % | Core Thickness (mil) | Layer A Thickness (nm) | Peff* HDPE |
|---|---|---|---|---|---|---|---|---|---|---|---|---|---|---|---|---|---|---|
| 1 | NOVA Surpass | 92 | Zeonor | 15 | Dowlex 2045 (7.5% master batch) | 29 | 243 | 243 | 21 | 29.5 (65) | 2.50 | 56% | 16% | 28% | 72% | 1.8 | 277.81 | 1.70 |
| 2 | NOVA Surpass | 92 | Zeonor | 15 | Dowlex 2045 (7.5% master batch) | 29 | 243 | 243 | 66 | 29.5 (65) | 2.50 | 56% | 10% | 28% | 72% | 1.8 | 277.81 | 1.55 |
| 3 | NOVA Surpass | 92 | Zeonor | 15 | Dowlex 2045 (7.5% Master batch) | 29 | 243 | 243 | 93 | 29.5 (65) | 2.50 | 567% | 16% | 28% | 72% | 1.8 | 277.81 | 1.40 |
| 4 | NOVA Surpass | 92 | Zeonor | 15 | Dowlex 2045 (7.5% master batch) | 29 | 243 | 243 | 110 | 29.5 (65) | 2.50 | 56% | 16% | 28% | 72% | 1.8 | 277.81 | 1.08 |

* g-mil/$m^2$/24 hrs

Table 2 shows that increasing the roller temperature increases the barrier property of Layer A (HDPE) (decrease in Peff).

To evaluate the moisture vapor and oxygen barrier performance of the multilayer films described above, theoretical barrier properties are calculated for the layered films using an established model for predicting the properties of multilayer films from the properties of the individual film layers. As is known in the art, the water vapor and oxygen permeabilities of a multilayer film can be calculated or predicted from monolayer control data (see W. J. Schrenk and T. Alfrey, Jr., POLYMER ENGINEERING AND SCIENCE, Nov. 1969, Vol. 9, No. 6; pp. 398 - 399). This series model for layered assemblies gives the gas permeability as

$$P = \left(\frac{\emptyset_A}{P_A} + \frac{1-\emptyset_A}{P_B}\right)^{-1} \quad \text{(Equation 1)}$$

Testing Methods

Embedded films are microtomed through the thickness at -75°C with a cryo-ultramicrotome (MT6000-XL from RMC) and cross-sections are examined with an atomic force microscope (AFM) to visualize the layers and the morphology inside layers. Phase and height images or the cross-section are recorded simultaneously at ambient temperature in air using the tapping mode of the Nanoscope IIIa MultiMode scanning probe (Digital Instruments). Although there is some non-uniformity, the average layer thickness is observed to be quite close to the nominal layer thickness calculated from the film thickness, the composition ratio and the total number of layers.

Water vapor permeabilities at 38°C, 100% relative humidity and 1 atm pressure are measured with a MOCON Permatran-W 3/31. The instrument is calibrated with National Institute of Standards and Technology certified 25 μm-thick polyester film of known water vapor transport characteristics. The specimens are prepared and the WVTR is performed according to ASTM F1249.

Oxygen permeabilities at 23°C, 0% relative humidity and 1 atm pressure are measured with a MOCON OX-TRAN 2/20. The instrument is calibrated with National Institute of Standards and Technology certified Mylar film of known $O_2$ transport characteristics. The specimens are prepared and the WVTR is performed according to ASTM D3985.

Moisture permeability for a film structure having 3 materials (barrier polymer, confining polymer, and skin material) is given by:

$$P = \left(\frac{\emptyset_B}{P_B} + \frac{\emptyset_C}{P_C} + \frac{\emptyset_{skin}}{P_{skin}}\right)^{-1}$$

where

$\emptyset_B$ is the volume fraction of barrier, $\emptyset_C$ is the volume fraction of confining polymer, and $\emptyset_{skin}$ is the volume fraction of skin, $P_B$ is the effective permeability of the barrier, $P_C$ is the permeability of the confining polymer and $P_{skin}$ is the permeability of the skin polymer.

Typical barrier films have skin layers or other layers that have such low barrier properties as not to contribute significantly to the overall barrier. As such, the barrier layer typically dominates the permeability of the film.

The moisture permeation measured through a film is defined as the Water Vapor Transmission Rate or WVTR and is related to the film permeability, P, and total thickness of the film, t, by

$$WVTR = P / t$$

Therefore, microlayered barrier film having constraining layers and outside skin layers has a convoluted WVTR related to the total thickness of each material given by:

$$WVTR = \left(\frac{t_B}{P_B} + \frac{t_C}{P_C} + \frac{t_{skin}}{P_{skin}}\right)^{-1}$$

where $t_B$ is the total thickness of barrier, $t_C$ is the total thickness of confining polymer, and $t_{skin}$ is the total thickness of skin.

The WVTR measures water vapor transmission rate for the entire film structure and is influenced by several

permeability values.

Effective permeability (Peff), moisture permeability (moisture P), and WVTR for a comparative sample (non-microlayered HDPE), and Examples 1-4 are provided in Table 3 below.

Table 3

| Example | A Layer | B Layer | Skin Layers | Total Thickness | A layer | B layer | Skin layers | Layer A thickness | HDPE moisture Peff* | LLDPE skin moisture P | COC moisture P | Film moisture P | Film WVTR |
|---|---|---|---|---|---|---|---|---|---|---|---|---|---|
| | | | | mil | Volume % | Volume % | Volume % | nm | g-mil/m$^2$/24 hr @ 38°C, 100%RH | | | | g/m$^2$/24 hr @ 38°C, 100%RH |
| CS* | Surpass HPs166 | Zeonor 1420R | 92.5% Dowlex 2045 + 7.5% MB adds) | 2.5 | 56% | 16% | 28% | 35560 | 3.3 | 20.6 | 4.7 | 4.60 | 1.84 |
| 1 | Surpass HPs167 | Zeonor 1420R | 92.5% Dowlex 2045 + 7.5% MB adds) | 2.5 | 56% | 16% | 28% | 278 | 1.70 | 20.6 | 4.7 | 2.65 | 1.06 |
| 2 | Surpass HPs167 | Zeonor 1420R | 92.5% Dowlex 2045 + 7.5% MB adds) | 2.5 | 56% | 10% | 28% | 278 | 1.55 | 20.6 | 4.7 | 2.45 | 0.98 |
| 3 | Surpass HPs167 | Zeonor 1420R | 92.5% Dowlex 2045 + 7.5% MB adds) | 2.5 | 567% | 16% | 28% | 278 | 1.40 | 20.6 | 4.7 | 2.23 | 0.89 |

(continued)

| Example | A Layer | B Layer | Skin Layers | Total Thickness | A layer | B layer | Skin layers | Layer A thickness | HDPE moisture Peff* | LLDPE skin moisture P | COC moisture P | Film moisture P | Film WVTR |
|---|---|---|---|---|---|---|---|---|---|---|---|---|---|
| 4 | Surpass HPs167 | Zeonor 1420R | 92.5% Dowlex 2045 + 7.5% MB adds) | 2.5 | 56% | 16% | 28% | 278 | 1.08 | 20.6 | 4.7 | 1.77 | 0.71 |

*CS-comparative sample

## Claims

1. A process for producing a cast multilayer film comprising:

   extruding a cast multilayer film with a core component comprising from 15 to 1000 alternating layers of layer A material and layer B material, the layer A material having a crystallization temperature, $T_1c$;
   passing the multilayer film across an air gap between a die exit and a roller contact point;
   moving the multilayer film across the roller at a rate from 20 kg/hr to 1000 kg/hr;
   maintaining the roller at a temperature from $T_1c$ - 30°C to $T_1c$; and
   forming a cast multilayer film with a layer A having a thickness from 50 nm to 500 nm and an effective moisture permeability from 0.77 to 2.33 g-mil/$m^2$/24 hrs;
   **characterized in that** the air gap has length from 75 mm to 800 mm.

2. The process of claim 1 comprising extruding a core component with high density polyethylene for the layer A material.

3. The process of any of claims 1-2 comprising extruding a core component with a layer B material having a glass transition temperature ($T_2g$) which is greater than $T_1c$.

4. The process of claim 3 selecting the layer B material such that the $T_2g$ is a least 20°C greater than $T_1c$.

5. The process of claim 1 comprising extruding a core component with a layer B material having a crystallization temperature ($T_2c$) which is greater than $T_{1C}$.

6. The process of claim 5 comprising selecting a layer B material such that the $T_2c$ is at least 20°C greater than $T_1c$.

7. The process of any of claims 1-6 comprising extruding a core component with a high density polyethylene for the layer A material and layer B material selected from the group consisting of a cyclic olefin polymer, a propylene-based polymer, a polycarbonate, and combinations thereof.

8. The process of claim 1 comprising selecting a propylene-based polymer for the layer A material and a cyclic olefin polymer for the layer B material.

9. The process of any of claims 1-8 comprising maintaining the roller at a temperature greater than 80°C.

10. The process of any of claims 1-9 comprising passing the multilayer film across an air gap having a length from 200 mm to 500 mm.

11. The process of any of claims 1-10 wherein the moving comprises contacting the multilayer film with the roller for a duration from 0.1 seconds to 5 seconds.

12. The process of any of claims 1-11 comprising coextruding opposing skin layers on the core component and forming a multilayer film having a thickness from 25 micrometers to 7.5 mm.

13. The process of any of claims 1-12 comprising forming a multilayer film wherein layer A and layer B each have an average layer thickness from 200 nm to 300 nm.

14. The process of any of claims 1-13 comprising moving the multilayer film across a roller having a temperature from 93°C to 110°C; and forming a multilayer film with layer A having a thickness from 200 nm to 300 nm and an effective moisture permeability from 0.77 to 1.50 g-mil/$m^2$/24 hrs.

## Patentansprüche

1. Ein Verfahren zum Herstellen einer gegossenen mehrschichtigen Folie, beinhaltend:

   Extrudieren einer gegossenen mehrschichtigen Folie mit einer Kernkomponente, die 15 bis 1000 alternierende Schichten von Material der Schicht A und Material der Schicht B beinhaltet, wobei das Material der Schicht A eine Kristallisationstemperatur, $T_1c$, aufweist;

Führen der mehrschichtigen Folie über einen Luftspalt zwischen einem Düsenaustritt und einem Walzenkontaktpunkt;
Bewegen der mehrschichtigen Folie über die Walze mit einer Geschwindigkeit von 20 kg/h bis 1000 kg/h;
Halten der Walze bei einer Temperatur von $T_1c$ - 30 °C bis $T_1c$; und
Bilden einer gegossenen mehrschichtigen Folie mit einer Schicht A, die eine Dicke von 50 nm bis 500 nm und eine effektive Feuchtigkeitsdurchlässigkeit von 0,77 bis 2,33 g-mil/$m^2$/24 h aufweist;
**dadurch gekennzeichnet, dass** der Luftspalt eine Länge von 75 mm bis 800 mm aufweist.

2. Verfahren gemäß Anspruch 1, beinhaltend das Extrudieren einer Kernkomponente mit Polyethylen hoher Dichte für das Material der Schicht A.

3. Verfahren gemäß einem der Ansprüche 1-2, beinhaltend das Extrudieren einer Kernkomponente mit einem Material der Schicht B, das eine Glasübergangstemperatur ($T_2g$) aufweist, die größer als $T_1c$ ist.

4. Verfahren gemäß Anspruch 3, Auswählen des Materials der Schicht B, sodass $T_2g$ mindestens 20 °C höher als $T_1c$ ist.

5. Verfahren gemäß Anspruch 1, beinhaltend das Extrudieren einer Kernkomponente mit einem Material der Schicht B, das eine Kristallisationstemperatur ($T_2c$) aufweist, die größer als $T_1c$ ist.

6. Verfahren gemäß Anspruch 5, beinhaltend das Auswählen eines Materials der Schicht B, sodass $T_2c$ mindestens 20 °C höher als $T_1c$ ist.

7. Verfahren gemäß einem der Ansprüche 1-6, beinhaltend das Extrudieren einer Kernkomponente mit einem Polyethylen hoher Dichte für das Material der Schicht A und Material der Schicht B, ausgewählt aus der Gruppe, bestehend aus einem Cycloolefin-Polymer, einem Polymer auf Propylenbasis, einem Polycarbonat und Kombinationen davon.

8. Verfahren gemäß Anspruch 1, beinhaltend das Auswählen eines Polymers auf Propylenbasis für das Material der Schicht A und eines Cycloolefin-Polymers für das Material der Schicht B.

9. Verfahren gemäß einem der Ansprüche 1-8, beinhaltend das Halten der Walze bei einer Temperatur von mehr als 80 °C.

10. Verfahren gemäß einem der Ansprüche 1-9, beinhaltend das Führen der mehrschichtigen Folie über einen Luftspalt, der eine Länge von 200 mm bis 500 mm aufweist.

11. Verfahren gemäß einem der Ansprüche 1-10, wobei das Bewegen das In-Kontakt-Bringen der mehrschichtigen Folie mit der Walze für eine Dauer von 0,1 Sekunden bis 5 Sekunden beinhaltet.

12. Verfahren gemäß einem der Ansprüche 1-11, beinhaltend das Coextrudieren gegenüberliegender Randschichten auf der Kernkomponente und Bilden einer mehrschichtigen Folie, die eine Dicke von 25 Mikrometer bis 7,5 mm aufweist.

13. Verfahren gemäß einem der Ansprüche 1-12, beinhaltend das Bilden einer mehrschichtigen Folie, wobei Schicht A und Schicht B jeweils eine durchschnittliche Schichtdicke von 200 nm bis 300 nm aufweisen.

14. Verfahren gemäß einem der Ansprüche 1-13, beinhaltend das Bewegen der mehrschichtigen Folie über eine Walze, die eine Temperatur von 93 °C bis 110 °C aufweist; und Bilden einer mehrschichtigen Folie mit Schicht A, die eine Dicke von 200 nm bis 300 nm und eine effektive Feuchtigkeitsdurchlässigkeit von 0,77 bis 1,50 g-mil/$m^2$/24 h aufweist.

## Revendications

1. Un procédé pour la production d'un film multicouche coulé comprenant :

l'extrusion d'un film multicouche coulé avec un constituant de coeur comprenant de 15 à 1 000 couches alternées de matériau de couche A et de matériau de couche B, le matériau de couche A présentant une température de cristallisation, $T_1c$ ;
le passage du film multicouche sur un entrefer entre une sortie de filière et un point de contact avec le ou les

galets ;
le déplacement du film multicouche sur le galet à un rythme allant de 20 kg/h à 1 000 kg/h ;
le maintien du galet à une température allant de $T_1c$ - 30 °C à $T_1c$ ; et
la formation d'un film multicouche coulé avec une couche A présentant une épaisseur allant de 50 nm à 500 nm et une perméabilité à l'humidité effective allant de 0,77 à 2,33 g-mil/m$^2$/24 ;
**caractérisé en ce que** l'entrefer présente une longueur allant de 75 mm à 800 mm.

**2.** Le procédé de la revendication 1 comprenant l'extrusion d'un constituant de coeur avec du polyéthylène haute densité pour le matériau de couche A.

**3.** Le procédé de n'importe lesquelles des revendications 1 à 2 comprenant l'extrusion d'un constituant de coeur avec un matériau de couche B présentant une température de transition vitreuse ($T_2g$) qui est supérieure à $T_1c$.

**4.** Le procédé de la revendication 3 sélectionnant le matériau de couche B de telle sorte que la $T_2g$ est supérieure d'au moins 20 °C à $T_1c$.

**5.** Le procédé de la revendication 1 comprenant l'extrusion d'un constituant de coeur avec un matériau de couche B présentant une température de cristallisation ($T_2c$) qui est supérieure à $T_1c$.

**6.** Le procédé de la revendication 5 comprenant la sélection d'un matériau de couche B de telle sorte que la $T_2c$ est supérieure d'au moins 20 °C à $T_1c$.

**7.** Le procédé de n'importe lesquelles des revendications 1 à 6 comprenant l'extrusion d'un constituant de coeur avec un polyéthylène haute densité pour le matériau de couche A et un matériau de couche B sélectionné dans le groupe constitué d'un polymère oléfinique cyclique, d'un polymère à base de propylène, d'un polycarbonate, et de combinaisons de ceux-ci.

**8.** Le procédé de la revendication 1 comprenant la sélection d'un polymère à base de propylène pour le matériau de couche A et d'un polymère oléfinique cyclique pour le matériau de couche B.

**9.** Le procédé de n'importe lesquelles des revendications 1 à 8 comprenant le maintien du galet à une température supérieure à 80 °C.

**10.** Le procédé de n'importe lesquelles des revendications 1 à 9 comprenant le passage du film multicouche sur un entrefer présentant une longueur allant de 200 mm à 500 mm.

**11.** Le procédé de n'importe lesquelles des revendications 1 à 10 dans lequel le déplacement comprend la mise en contact du film multicouche avec le galet pour une durée allant de 0,1 seconde à 5 secondes.

**12.** Le procédé de n'importe lesquelles des revendications 1 à 11 comprenant la coextrusion de couches de peau opposées sur le constituant de coeur et la formation d'un film multicouche présentant une épaisseur allant de 25 micromètres à 7,5 mm.

**13.** Le procédé de n'importe lesquelles des revendications 1 à 12 comprenant la formation d'un film multicouche dans lequel la couche A et la couche B présentent chacune une épaisseur de couche moyenne allant de 200 nm à 300 nm.

**14.** Le procédé de n'importe lesquelles des revendications 1 à 13 comprenant le déplacement du film multicouche sur un galet présentant une température allant de 93 °C à 110 °C ; et la formation d'un film multicouche avec la couche A qui présente une épaisseur allant de 200 nm à 300 nm et une perméabilité à l'humidité effective allant de 0,77 à 1,50 g-mil/m$^2$/24 h.

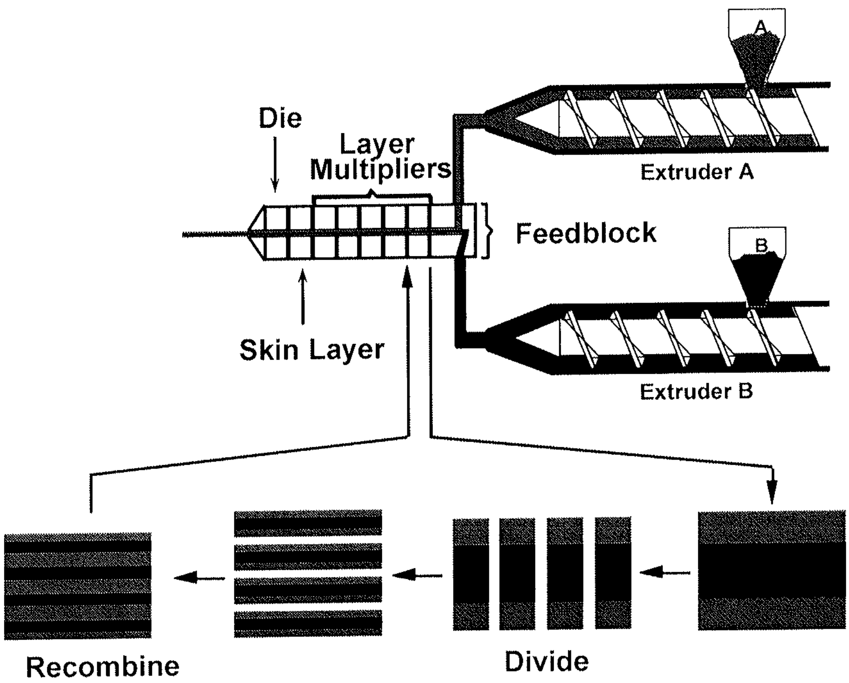


Figure 1. Cast Film Line Experimental Set-up

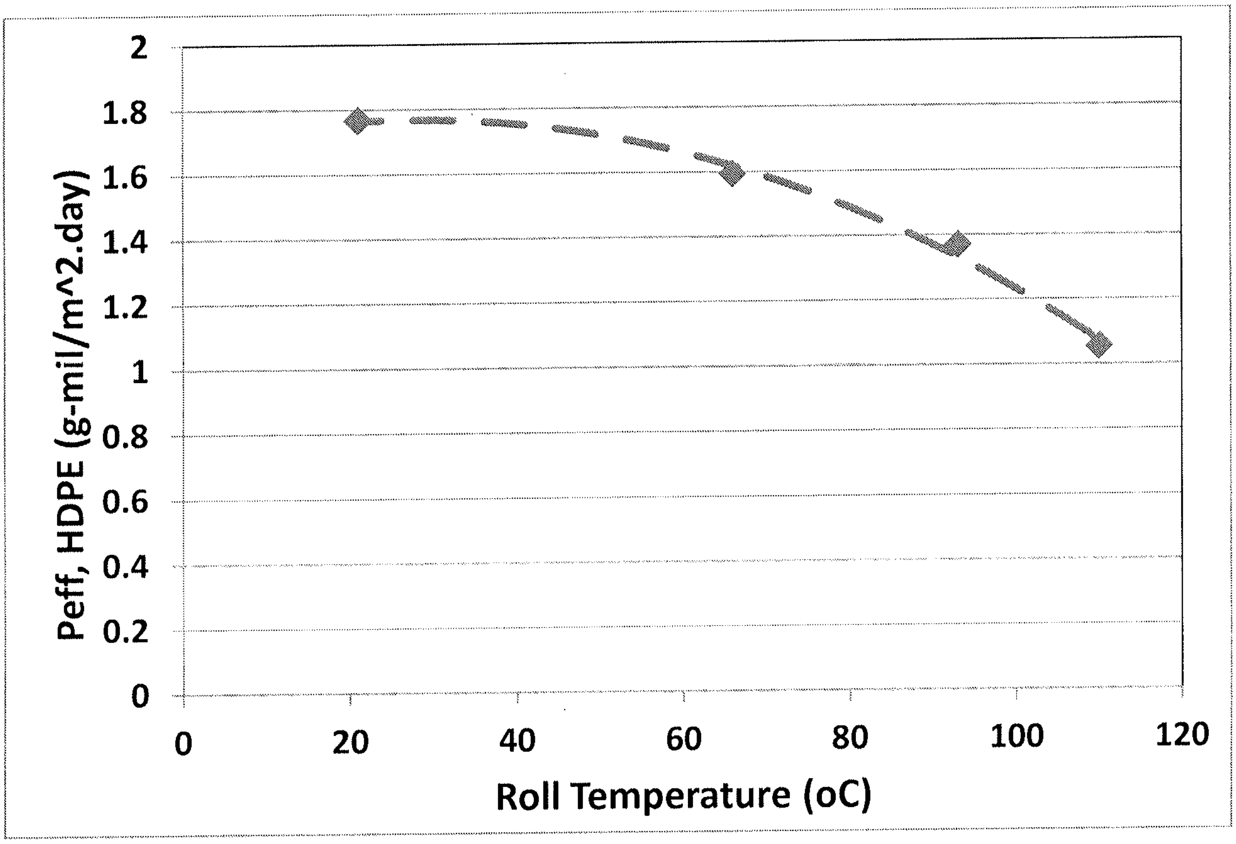


Figure 2. Effective Permeability vs roller temperature

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2013101699 A1
- WO 2008008875 A
- US 3565985 A
- US 3557265 A
- US 3884606 A
- US 5094788 A
- US 5094793 A
- US 4842791 A
- US 6685872 B
- WO 2010096608 A2
- WO 2000056783 A1


### Non-patent literature cited in the description


- **YAMAZAKI.** *Journal of Molecular Catalysis A: Chemical,* 2004, vol. 213, 81-87
- **SHIN et al.** *Pure Appl. Chem.,* 2005, vol. 77 (5), 801-814
- **B. WUNDERLICH.** Thermal Characterization of Polymeric Materials. Academic Press, 1997, 277, , 278
- **B. WUNDERLICH.** Thermal Characterization of Polymeric Materials. Academic Press, 1997, 278, , 279
- **W. J. SCHRENK ; T. ALFREY, JR.** *POLYMER ENGINEERING AND SCIENCE,* 1969, vol. 9 (6), 398-399